# EUROPEAN PATENT APPLICATION

(11) **EP 3 760 516 A1**
(43) Date of publication of application: **06.01.2021**
(21) Application number: 19184215.2
(22) Date of filing: 03.07.2019
(51) Int. Cl.: B62D 1/06, B60N 2/56, H05B 3/34

(54) **DEVICE FOR HEATING A VEHICLE INTERIOR COMPONENT**

(71) Applicant: ALT Technologies B.V., 3565 AK Utrecht (NL)
(72) Inventor: Sminia, Jelmer Douwe, 3523 SZ Utrecht (NL)
(74) Representative: Nederlandsch Octrooibureau

(57) **Abstract**

The invention relates to an electrically resistive heating element (20), adapted for covering a curved surface (19) of a vehicle interior component (12). The heating element includes a carrier layer, electrical terminals, and a heating circuit. The carrier layer is made of a flexible and electrically insulating material, and is to be attached to the curved surface of the component. The terminals are provided on the carrier layer and adapted to be coupled to a source for heating current. The heating circuit is formed of a flexible two-dimensional mesh of slit-and-expanded material, which is shaped into an electrically resistive surface trajectory that is fixed onto the carrier layer and extends along this carrier layer between the two electrical terminals.

## Description

### Technical Field

The invention relates to an electrically resistive heating element for covering a curved surface of a vehicle interior component, as well as to a vehicle interior component and a vehicle including such a heating element. The invention further relates to methods for manufacturing such an electrically resistive heating element, for manufacturing a vehicle interior component, and for installing such component into a vehicle.

### Background Art

According to known techniques, steering wheels of vehicles can be provided with internal elements for heating the steering wheel, which allow the driver to grip the wheel in comfort even on very cold days.

International patent publication WO2001/64496A2 describes a steering wheel for an automotive vehicle, which includes an Ohmic heating element made of a woven textile of electrically conducting wires or a wire mesh. This known heating element is pre-formed into a three-dimensional shape, to facilitate placement thereof around the steering wheel, and to reduce the likelihood of damaging the conducting wires or mesh.

It would be desirable to provide a resistive heating element for placing around a curved surface of a vehicle interior component, which has a low likelihood of damaging the electrically resistive heating element, but which can initially be formed as a flat semi-finished product.

### Summary of Invention

According to a first aspect, there is provided an electrically resistive heating element with a carrier layer, two electrical terminals, and a heating circuit. The heating element has a flat and initially planar shape, and is deformable into a curved shape so as to cover a curved surface of a vehicle interior component. Examples of such components are a steering wheel, a vehicle seat, an armrest, a floor mat, a vehicle roof, or a control panel. The carrier layer is made of a flexible and electrically insulating material, and is adapted to be attached to the curved surface of the vehicle interior component. The two electrical terminals are provided on the carrier layer and are adapted to be electrically coupled to a source for heating current. The heating circuit is formed of a flexible two-dimensional mesh of slit-and-expanded material (SEM). This SEM mesh is mechanically attached to and along the carrier layer, and forms an electrically resistive trajectory that extends between and electrically interconnects the two electrical terminals.

The SEM mesh is made of electrically conducting material having finite resistivity, so that the resulting surface structure has non-zero electrical resistance. An electrical current passing through the SEM mesh will generate Ohmic losses in this mesh trajectory, which causes the SEM mesh to heat up (i.e. Ohmic/Joule heating). The source for heating current may for instance be the electrical battery of the vehicle, or an external electrical power source. For applications in vehicle interior components that form a support surface or tactile interface with vehicle occupants, the resistive properties of the SEM mesh are preferably selected such as to allow heating of the component surface temperature to a value between 37° and 45° Celsius, more preferably between 42° and 44°C.

The proposed flexible heating element may be manufactured as an initially flat product. The production process involved for manufacturing such a flat shapes can be kept relatively simple and associated costs relatively low, compared to heating elements that are readily manufactured in a three-dimensionally curved shape. Deforming of the heating element into the three-dimensionally curved surface shape can be postponed until it is placed onto the intended component surface, for instance during vehicle assembly or finishing of the vehicle's interior. The initially flat shape of the element may also allow large quantities of elements to be easily stacked or packed, to facilitate transport and storage.

The proposed heating element may be bent and stretched (both the carrier layer and SEM mesh) from its initially planar shape, to allow it to closely follow a curved surface of the target component. The target curved surface may have a "developable" character, which refers to a surface that can be formed only from bending/folding a planar sheet of material without warping the material along its own surface. However, the target surface may also have a "non-developable" character, thus requiring in-plane warping (stretching) of the heating element. The out-of-plane foldability and in-plane deformability of both the carrier layer and SEM mesh allow the heating element to be bent and stretched from its initial planar shape into a curved shape that matches the (possibly non-developable) outer surface of the target vehicle component.

The two-dimensional SEM mesh is manufactured by creating a regular pattern of multiple slits in a thin sheet of precursor material, and linearly expanding the sheet with slits to form a mesh with a regular pattern of apertures, using known methods. The slitting divides the sheet material into multiple groups of mesh strands that initially are all co-aligned and mutually abutting. Subsequent expanding of the sheet in a direction transverse to slit lines will displace certain groups of mesh strands in transverse direction, so that selected groups of mesh strands become rotated relative to other groups of mesh strands, thereby transforming the slits into a regular pattern of openings (e.g. diamonds or hexagons) between the displaced strands. Some of the strands may become slightly raised out of the plane during stretching, but such protrusions can be flattened (e.g. by press-rolling) during or after the slitting and expanding steps.

A SEM mesh should be distinguished from perforated sheets, welded wire meshes, and woven wire meshes. Manufacturing SEM mesh involves slitting, thus producing far less scrap material compared to mesh punching processes in which punched aperture material is discarded. The low mechanical stresses involved in the slitting and expanding process ensure that the electrical and thermal properties of the resulting SEM mesh remain homogeneous and predictable, which yields a lower probability for undesirable local electrical bottlenecks and thermal hot spots. The strands in the SEM mesh remain mechanically fixed to each other, which prevents unraveling of the mesh strands and thus yields a mesh that is more robust than woven meshes.

The SEM mesh is sufficiently thin to have an out-of-plane flexibility that allows the mesh to be bent to obtain a minimum radius of curvature in the order of centimetres, or possibly even millimetres. Here, the term "thin" refers to a SEM mesh that extends in a two-dimensional surface pattern and has a thickness dimension of at least two orders (but preferably three or more) orders of magnitude smaller than both of its in-plane dimensions. In particular, the thickness of the SEM mesh is in a range of several tens to hundreds of micrometres.

The SEM mesh is attached to the carrier layer. The SEM mesh may be placed in any desired pattern along the carrier layer, thus allowing customization of the heating element to specific heating requirements, by locally varying the surface area of the SEM mesh to create regions of increased and/or reduced heating intensity.

The carrier layer forms the structural base that provides mechanical stability to the heating element. The carrier layer may be made of any suitable material that is electrically insulating and mechanically sufficiently flexible to allow out-of-plane flexing as well as in-plane stretching. Exemplary materials are plastic foam, e.g. closed-cell polyvinyl chloride (PVC) foam, polyethylene (PE) foam, or polyurethane (PU) foam. Other materials, like elastomers or 3D deformable (synthetic) leather, rubber, or woven fabrics, are also possible.

Other functional layers, such as a flat hands-off detection (HOD) layer, may also be attached to the carrier layer. Such other layers may be arranged on a side of the carrier layer opposite to the SEM mesh, or may be arranged on the same side of the SEM mesh but separated by an interposed insulating layer.

The SEM mesh may be structured as a two-dimensional periodic array of unit cells. Depending on the locations of the initial slits, the dimensions and shapes of the resulting strands and apertures in the SEM mesh may be different. The SEM mesh may for instance have unit cells with diamond-shapes or regular hexagonal shapes. The size of the cuts and their mutual positions in the precursor sheet determine the shapes of the strands in the mesh, and may be varied to form SEM meshes having desired values for their electrical resistance, thermal conductance, and mechanical strength and deformability.

Preferably, the SEM mesh has uniform values for thickness, strand dimensions, and mesh size along its entire surface area (at least in the initial planar shape). Such uniform dimensional properties will result in a heating element with (approximately) uniform visual appearance and tactile sensation for the user interfacing with the vehicle component.

In embodiments, the mesh heating circuit is shaped as a meandering trajectory that extends between the electrical terminals and across the carrier layer. This meandering trajectory may include a plurality of elongated linear strip portions of SEM mesh, which are interconnected in series, and which extend mutually parallel and with nominal axes aligned with a longitudinal direction of the carrier layer.

In further embodiments, the carrier layer has a width (Wc) in a transverse direction, this width varying as function of position along the longitudinal direction to define at least one narrower carrier region and at least one wider carrier region. The number of elongated strip portions counted in transverse direction may then be lower in the narrower carrier region than the number of elongated strip portions in the wider carrier region.

Preferably, all of the linear strip portions in the SEM mesh have essentially identical widths viewed in a direction transverse to the macroscopic flow direction of the heating current through the respective strip. The use of constant strip widths ensures that the surface current density distribution in each strip portion stays within safety bounds that can be determined in advance. By varying the transverse number of strip portions in narrower regions of the carrier layer (rather than the width of each strip), the risk of creating unexpected hot spots is reduced.

The elongated strip portions may have widths (Ws) along the transverse direction, these widths being at least two orders of magnitude smaller than the length (Lc) of the carrier layer (i.e. Lc ≥ 100·Ws). Forming a surface circuit from a plurality of narrow mesh strips contributes to an equal heat spreading over the surface. As mentioned, all the elongated strip portions in the SEM mesh trajectory may have essentially identical widths.

In further embodiments, the carrier layer is elongated and has a length along its longitudinal direction and a width along its transverse direction. This length may be at least one order of magnitude larger than the width (Lc ≥ 10·Wc). The elongated strip portions may extend mutually parallel in the longitudinal direction along the carrier layer, thereby forming a sequence of strips separated by gaps along the transverse direction. The gaps should be sufficiently large to prevent the occurrence of a short circuit between the parallel strip portions. Placing the elongated strip portions parallel to each other leads to elongated gaps with a constant width, which makes it easy to provide a minimum distance between the elongated strip portions everywhere.

In embodiments, pairs of adjacent elongated strip portions may be interconnected via a coupling strip portion of SEM mesh, in particular at or near a distal longitudinal end of the carrier layer. The combination of the elongated strips and the coupling strip portions may lead to a heating circuit with a meandering pattern with long trajectory. A meandering pattern may be designed to generate an substantially equal heat loss over the full width of the carrier.

In more preferred embodiments, the elongated strips and coupling strip portions are integrally formed from the same SEM mesh. Forming the SEM mesh in one piece and cutting out redundant portions allows for an easy production process. In addition, by forming the heating circuit from a single mesh only, no connections between different SEM mesh portions are required. Since such connections can be prone to damages and may possibly lead to disruptions in the heating circuit, forming the SEM mesh integrally reduces the vulnerability of the heating element.

In further embodiments, the SEM mesh is formed as a two-dimensional periodical mesh with anisotropic unit cells, defining a shorter dimension and a longer dimension. An anisotropic mesh has different mechanical properties in different stress directions. This anisotropy may be used in an advantageous way. For instance, the shorter dimension of the mesh unit cells may be aligned with the longitudinal direction of the carrier layer, and the longer dimension of the mesh unit cells may be aligned with the transverse direction of the carrier layer. This orientation ensures that the in-plane plastic deformability of the SEM mesh will be largest along the longitudinal direction of the carrier layer. Such a heating element will be specifically suited to be attached to a curved vehicle interior surface in which the largest deviation from a developable surface occurs along a trajectory corresponding with the longitudinal direction of the carrier layer and longest dimension of the heating element.

The vehicle interior component may for instance be a steering wheel, with part or all of its outer rim forming the curved target surface. This outer rim may have a substantially toroidal shape associated with a toroidal angle and a poloidal angle. In this embodiment, the longer dimension of the carrier layer along its longitudinal direction (in initial planar shape) may be conformable to the circumference of the steering wheel along its toroidal angle, whereas the shorter dimension of the carrier layer along its transverse direction may be conformable to the circumference of the outer rim along its poloidal angle. In addition, the anisotropic unit cells of the SEM mesh may have shorter and longer cell dimensions that are aligned with the longitudinal and transverse directions of the carrier layer, respectively.

In embodiments, the SEM mesh consists essentially of slit-and-expanded metal or metal alloy, and preferably copper or copper alloy. The electrical conductivity, thermal conductivity, mechanical strength, and ductility properties of copper (alloys) allow formation of SEM meshes with strand thickness and widths in the range of several tens to hundreds of micrometres, and exhibiting a good balance between electrical resistance, mechanical strength, and in-plane and out-of-plane deformability. A heater element with a SEM mesh made of copper (alloy) preferably has a thickness in a range of 10 micrometres to 200 micrometres, for instance in a range of 30 micrometres to 100 micrometres. Other materials with sufficient electrical conductivity (and finite resistivity) may be used to form the SEM mesh, for example silver, aluminium, or alloys including carbon.

According to a second aspect of the present invention, there is provided a vehicle interior component defining a curved surface, this curved surface being provided with an electrically resistive heating element according to the first aspect.

In embodiments, this vehicle interior component is formed as a steering wheel and the curved surface comprises at least a portion of an outer rim of the steering wheel. The SEM mesh of the heating element extends along the outer rim portion of the steering wheel. The SEM mesh may be positioned along the entire outer rim of a steering wheel, or along only portions of the surface where a driver places his/her hands.

In an embodiment, the outer rim of the steering wheel has a substantially toroidal shape associated with (commonly known) toroidal and poloidal angles. Here, the SEM mesh may be formed as a periodical mesh with anisotropic unit cells having a shorter dimension and a longer dimension. The shorter dimension may be aligned with the toroidal angle, and the longer dimension may be aligned with the poloidal angle, when the heater element is arranged around the outer rim. By arranging the heating element in this manner, the longer cell dimension is aligned with the poloidal angular direction (which can be matched by forming the heater element into a cylinder), whereas the shorter cell dimension is aligned with the toroidal angle (which requires a non-developable deformation of the heater element).

According to a third aspect, there is provided a vehicle with a vehicle interior component according to the second aspect.

According to a fourth aspect, and in accordance with the advantages and effects described herein above, there is provided a method for manufacturing an electrically resistive heating element that is adapted for covering a curved surface of a vehicle interior component. The method includes:
- providing a carrier layer made of flexible and electrically insulating material;
- providing two electrical terminals on the carrier layer, the terminals being adapted to be electrically coupled to a source for electrical current;
- attaching a flexible two-dimensional slit-and-expanded material, SEM, mesh onto a surface of the carrier layer so as to form an electrically conducting surface strip trajectory that interconnects the electrical terminals and forms a surface heating circuit when energized by the source. The SEM mesh may for instance be attached to the carrier layer using an adhesive.

In embodiments, the method further includes:
- cutting a precursor sheet of SEM mesh along consecutive linear cutting lines mutually oriented at non-zero angles (e.g. at 90° angles), thereby forming a SEM mesh trajectory having a piecewise linear (e.g. rectangular) meandering pattern that extends uninterruptedly from the first electrical terminal to the second electrical terminal.

The resulting meandering trajectory may for instance include a plurality of elongated linear strip portions of SEM mesh that are interconnected in series, and which extend mutually parallel and with nominal axes aligned with a longitudinal direction of the carrier layer.

In embodiments, the method includes:
- cutting the carrier layer along its edges so as to have a width profile in transverse direction, which varies as function of position along the longitudinal direction so that it defines at least one narrower carrier region and at least one wider carrier region, and
- varying the quantity of elongated strip portions of the SEM mesh counted in transverse direction, such that the number of elongated mesh strip portions is lower in the narrower carrier region than the number of elongated strip portions in the wider carrier region.

In embodiments, the method further includes: providing the carrier layer with an elongated shape having a length along a longitudinal direction and a width along a transverse direction, the length being at least one order of magnitude larger than the width. Cutting of the precursor sheet of SEM mesh may then include: cutting an alternating pattern of short and long circuit edge lines, the long circuit edge lines extending mutually parallel to delineate edges of the linear strip portions, and each of the short circuit edge lines being interposed between two long circuit edge lines and extending transverse to the long circuit edge lines to delineate edges of coupling strip portions. Arranging the two-dimensional SEM mesh on the surface of the carrier layer may then include: aligning the linear strip portions with the longitudinal direction of the carrier layer, and aligning the coupling strip portions with the transverse direction of the carrier layer.

According to a fifth aspect, there is provided a method for manufacturing a vehicle interior component with an electrically resistive heating element, the vehicle interior component defining at least one curved surface having one or more finite radii of curvature such that the surface deviates from a developable surface in at least one warping direction. The method includes:
- providing an electrically resistive heating element according to the first aspect, with a SEM mesh that is structured as a periodical mesh with anisotropic unit cells having a shorter cell dimension defined along a first mesh direction and a longer cell dimension defined along a second mesh direction;
- arranging the heating element on a portion of the curved surface of the vehicle interior component, thereby aligning the shorter cell dimension with a direction of the curved surface corresponding to a local direction or severest deviation from a developable surface;
- folding the heating element along the surface while warping the heating element out of its initially planar shape, in order to cover the curved surface, and
- fixing the heating element to the vehicle interior component.

In an embodiment, the vehicle interior component is a steering wheel with an outer rim having a substantially toroidal shape associated with a toroidal angle and a poloidal angle, the poloidal angle defining the smallest radius of curvature. The curved surface comprising at least a portion of the outer rim. Here, attaching of the heating element to a portion of the curved outer rim of the steering wheel is involves stretching the heating element along an outer periphery of the rim associated with the toroidal angle, tightly wrapping the heating element along the outer rim over the poloidal angle, and connecting opposite edges of the carrier layer to each other to fixate the heating element around the outer rim.

According to a sixth aspect, there is provided a method for installing a heatable vehicle interior component according to the second aspect in a vehicle having a source for supplying electrical current. The method includes:
- positioning the vehicle interior component with heating element on an interior side of the vehicle, and
- electrically coupling the electrical terminals of the heating element to the source.

### Brief Description of Drawings

Embodiments will now be described, by way of example only, with reference to the accompanying schematic drawings in which corresponding reference symbols indicate corresponding parts. In the drawings, like numerals designate like elements.
Figure 1 schematically shows a vehicle with a steering wheel;
Figurer 2 shows a steering wheel with a heating element according to an embodiment;
Figures 3a and 3b schematically show a heating element according to an embodiment;
Figures 4a and 4b show a mesh structure of the heating element from figures 3a-b;

The figures are meant for illustrative purposes only, and do not serve as restriction of the scope or the protection as laid down by the claims.

### Description of Embodiments

The following is a description of certain embodiments of the invention, given by way of example only and with reference to the figures.

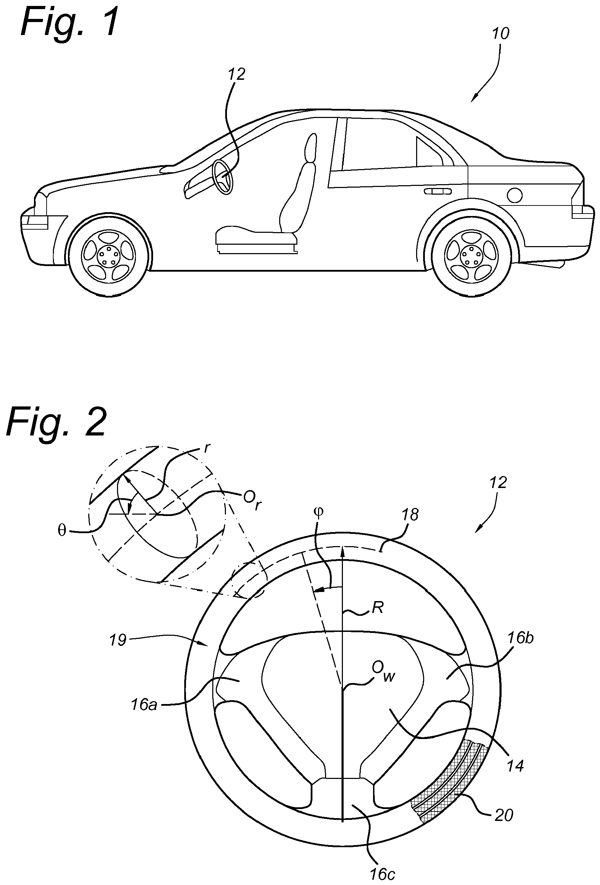

Figure 1 shows an exemplary vehicle 10, which has an interior with seats for accommodating a driver and several passengers. The vehicle 10 includes a steering arrangement with a steering wheel 12, which allows a driver to control the direction of travel relative to the road surface.

Figure 2 illustrates an exemplary steering wheel 12, which includes a hub 14, an outer rim 18, and spokes 16 that connect the rim 18 to the hub 14. The outer rim 18 defines an outer surface 19, which is designed to be gripped by the driver's hands. This outer surface 19 is formed by an outer wrap of leather, plastic, synthetic rubber, or similar electrically insulating material, which covers and surrounds the core structure of the rim 18. The core structure of rim 18 is formed by a highly rigid metallic skeleton embedded in foamed material. An Ohmic heating element 20 is arranged between the outer wrap and the core structure. This element 20 is adapted for heating the outer surface 19 of the rim 18.

The outer rim surface 19 can roughly be approximated by a toroidal surface having a large central radius R, a small local radius r, a toroidal angle ϕ of rotation relative to the wheel centre Ow, and a poloidal angle θ of rotation about the local rim centre Or. This outer surface 19 has a non-developable character

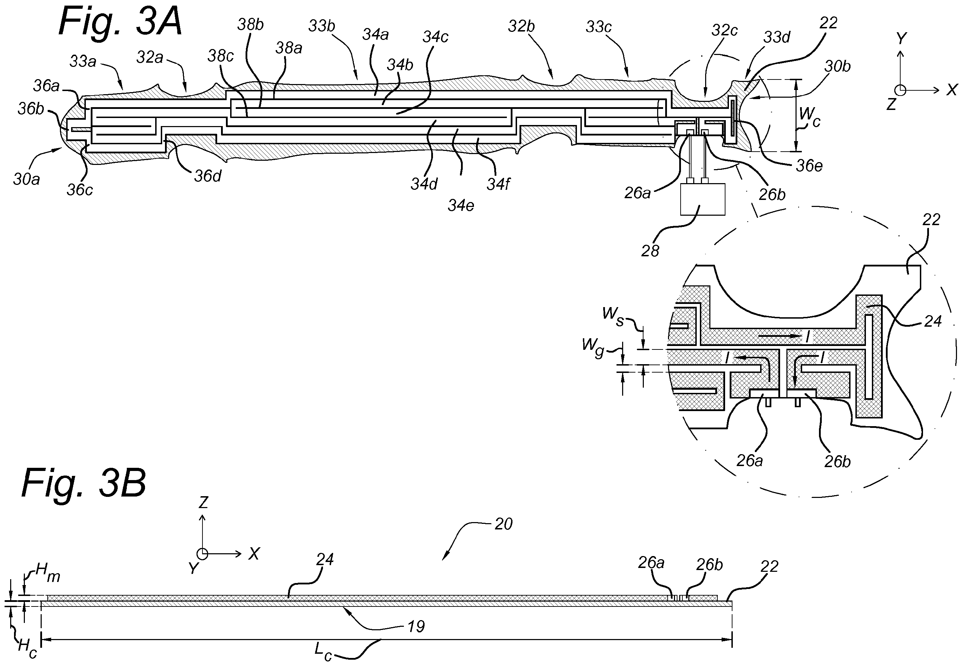

Figures 3a and 3b illustrate an exemplary embodiment of a heating element 20, with figure 3a showing a top view and figure 3b showing a side view. The heating element 20 is depicted in a flat initial configuration, and is adapted to be wrapped around a wheel rim 18 to yield a surface shape as in figure 2. The heating element 20 includes a carrier layer 22, a heating circuit 24, and a pair of electrical terminals 26.

The flat configuration of element 20 is produced in an initial manufacturing stage, but the carrier layer 22 and heating circuit 24 have sufficient out-of-plane flexibility to allow the heating element to be bent into curved developable shapes with radius of curvature in the order of centimetres, for instance into a circular cylinder having a radius r associated with the local (poloidal) circumference of rim 18. In addition, both the carrier layer 22 and heating circuit 24 have sufficient in-plane elasticity and/or plasticity to compensate for the deviation of the rim 18 from a true developable surface, and to allow the heating element 20 to be stretched and wrapped around the outer rim 18 in a subsequent assembly stage, for instance to allow stretching of the element 20 along its own surface to allow it to locally expand and fit around the global (toroidal) outer circumference of rim 18. Here, a maximum in-plane elongation (i.e. percentile elongation of element 20 at rupture point compared to its original length) of up to 15% may suffice.

The carrier layer 22 is made of an electrically insulating material, which in this case is closed-cell polyvinylchloride (PVC) foam. Other similar electrically insulating and three dimensionally deformable materials may also be used, like elastomers, closed-cell polyethylene (PE) foam, closed-cell polyurethane (PU) foam. This carrier layer 22 is deformable, and also allows out-of-plane flexing as well as in-plane stretching.

In a non-deformed state, the carrier layer 22 has a length Lc along a longitudinal direction X, and a width Wc along a transverse direction Y. The length Lc is at least one order of magnitude larger than the width Wc. For an Ohmic heating element 20 extending along the entire circumference of the rim 18 of a car steering wheel, the length Lc is typically in a range of 100 to 150 centimetres (e.g. about 125 cm), and the width Wc is typically in a range of 5 to 20 cm (e.g. about 10 to 12 cm). In alternative embodiments, Ohmic heating elements may be provided that have a shape that conforms (or is conformable to) only part of the steering wheel rim, for instance to only half the circumference of the wheel rim.

The two electrical terminals 26 are provided on the carrier layer 22, and are electrically coupled to a source 28 for supplying heater current. The source 28 is located in the hub 14 or further down in the steering column.

The heating circuit 24 is formed by a two-dimensional mesh 40 of SEM. In this example, the SEM mesh 40 consists essentially of copper, and forms an electrically conductive trajectory that is attached to the carrier layer 22 and extends across this layer 22 in a continuous trajectory from the first electrical terminal 26a to the second electrical terminal 26b. The SEM mesh 40 has a non-zero electrical resistance, so that an electrical current passing through the SEM mesh 40 will generate Ohmic losses and cause the SEM mesh 40 to heat up.

SEM mesh 40 is initially cut to form a meandering pattern, which is composed of a plurality of interconnected elongated linear strip portions 34 and coupling strip portions 36. The sequence of interconnected strip portions 34, 36 is composed of the same single sheet of mesh material, and forms an electrically connected resistive trajectory between the electrical terminals 26. In this example, the portions 34, 36 form linear segments that are alternatingly connected, and which jointly extend as a piece-wise linear trajectory along the carrier layer 22. Each strip portion 34, 36 is oriented at a right angle relative to its preceding and subsequent strip portions 34, 36.

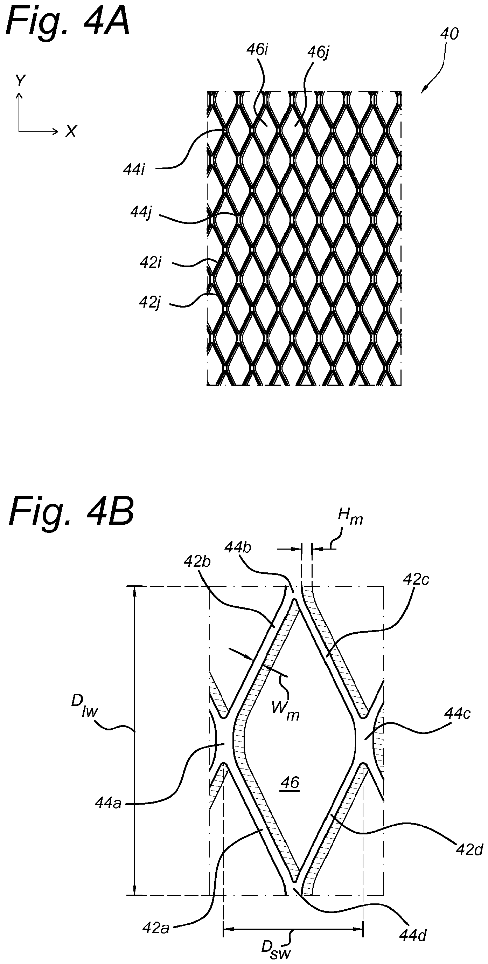

The strip portions 34 are arranged essentially mutually parallel in the longitudinal direction X along the carrier layer 22, and are mutually separated by gaps 38 along the transverse direction Y. Viewed along the transverse direction Y, the strip portions 34 have widths Ws that are at least two orders of magnitude smaller than the length Lc of the carrier layer 22. In this example, all strip portions 34 have essentially identical widths Ws, at least within the accuracy of a cell width of the mesh 40 (see e.g. mesh diagonals Dlw or Dsw in figure 4b).

The width Wc of the carrier layer 22 in the transverse direction Y varies as function of position along the longitudinal direction X. In this example, the carrier layer 22 defines three narrower carrier regions 32a, 32b, 32c, which are associated with regions of the rim 18 where the spokes 16 are attached (fig.2). Correspondingly, the carrier layer 22 defines four wider carrier regions 33a, 33b, 33c, 33d associated with gripping regions of the rim 18.

The electrical terminals 26 and the start and end portions of the mesh trajectory 40 are located close to each other on the same side and near a distal end 30b of the carrier layer 22. In this example, these elements are located in the same narrow region 32c that is associated with the lower spoke 16c of the wheel 12. Figure 3a further illustrates that the transverse position of several elongated strip portions 34 is changed within the narrower regions 32, in such a way that the (integer) number of elongated strip portions 34 counted along the transverse direction Y equals four in the narrower regions 32a, 32b, whereas the number of strip portions 34 in the wider regions 33a, 33b, 33c equals six (i.e. the number in said narrower regions 32 is lower than the number of strip portions 34 in said wider regions 33).

Figures 4a and 4b illustrate structure details of an exemplary a SEM mesh 40 for use in a heating element 20, for instance the element of figures 3a-3b. The resulting SEM mesh 40 after expansion is formed by a plurality of strands 42, which are interconnected at intersections or knots 44. At each mesh unit cell, four strands 42 and associated knots 44 enclose a mesh opening 46 with a regular diamond shape. The resulting periodical two-dimensional mesh 40 has anisotropic diamond-shaped unit cells, which can be characterized by a short way diagonal Dsw and a long way diagonal Dlw that are defined along two orthogonal surface directions of the mesh. Each of these diagonals is measured from a centre of a knot 44 on one side of a selected mesh opening 46 to a centre of a knot 44 on an opposite side of this same mesh opening 46. In this example, the short way diagonal Dsw of the unit cells is aligned with the longitudinal direction X of the carrier layer 22, whereas the long way diagonal Dlw is aligned with the transverse direction Y of the carrier 22. Consequently, when the heating element 20 is wrapped around the rim 18 of steering wheel 12, the short way diagonal Dsw of the cells becomes aligned with the toroidal angle ϕ, and the long way diagonal Dlw of the cells becomes aligned with the poloidal angle θ (figure 2). This mesh orientation confers good stretching characteristics onto the heating element 20.

In this example, the copper SEM mesh 40 has a thickness Hm of approximately 50 micrometres, the strands 42 have widths Wm of about 110 micrometres, the short way diagonals Dsw are about 1.2 millimetres, and the long way diagonals Dlw are about 2.5 millimetres. The areal mass density of the resulting SEM mesh 40 is approximately 75 grams per square meter (gsm).

The thickness Hm of the copper precursor sheet, prior to slitting, is selected in light of the application of the heating element 20, and may typically be in the range of 10 micrometres to 200 micrometres. The size and position of the slits formed to produce the openings 46 in the SEM mesh 40, and the degree of expansion applied to the material to skew the strands 42 relative to each other, will be determined in light of both mechanical and electrical requirements for the heating element 20. Depending on the initial level of expansion of the copper mesh and the desired residual deformation potential for the planar heating element, areal mass densities in a range of 10 to 150 gsm are contemplated.

The SEM mesh 40, once formed, may be cut to any desired width and circuit trajectory in light of the proposed form of the heating element 20. In the example of figure 3a, the elongated strip portions 34 have widths Ws that are about 2 to 20 times the long way diagonal Dlw of the mesh 40.

The embodiments of the present disclosure are not limited to the exemplary embodiments described herein above and should be construed as including all modifications, changes, equivalent devices and methods, and/or alternative embodiments of the present disclosure. For the purpose of determining the extent of protection conferred by the claims of this document, due account shall be taken of any element which is equivalent to an element specified in the claims.

For instance, the exemplary heater elements described herein above have been discussed in the context of a steering wheel for a car, but it will be understood that the heater element may be applied in other motor vehicles, railroad vehicles, airplanes, or ships. The element may be applied on other curved surfaces of vehicle interior components, like a motor vehicle seat, armrest, floor mat, roof, or vehicle operation panel (e.g. dashboard).

In the above examples, the SEM mesh consisted essentially of copper, and was structured as a regular mesh with diamond-shaped unit cells. In alternative embodiments, other electrically conductive materials may be used, like copper-based alloys, aluminium, silver, etc. Alternatively or in addition, the mesh may be formed from a period array of unit cells having different shapes, for instance regular hexagonal cells.

### List of Reference Symbols

- 10: vehicle (e.g. car)
- 12: interior component (e.g. steering wheel)
- 14: hub
- 16: spoke
- 18: rim
- 19: outer surface
- 20: heating element
- 22: carrier layer
- 24: heating circuit
- 26: electrical terminal
- 28: current source
- 30: distal end
- 32: narrower region
- 33: wider region
- 34: elongated strip portion
- 36: coupling strip portion
- 38: gap
- 40: slit-and-expanded material mesh
- 42: mesh strand
- 44: strand intersection (knot)
- 46: mesh opening
- I: heater current
- R: central radius
- r: local radius
- Ow: wheel centre
- Or: rim centre
- ϕ: toroidal angle
- θ: poloidal angle
- X: longitudinal direction
- Y: transverse direction
- Z: normal direction
- Dsw: short way diagonal
- Dlw: long way diagonal
- Lc: carrier length
- Hc: carrier thickness
- Hm: mesh thickness
- Wc: carrier width
- Ws: strip width
- Wg: gap width
- Wm: strand width

## Claims

1. An electrically resistive heating element (20), adapted for covering a curved surface (19) of a vehicle interior component (12), wherein the heating element comprises:
a carrier layer (22) made of a flexible and electrically insulating material, and adapted to be attached to the curved surface of the vehicle interior component;
two electrical terminals (26a, 26b), provided on the carrier layer and adapted to be electrically coupled to a source for heating current (I);
a heating circuit (24) forming an electrically resistive trajectory that extends between the two electrical terminals, wherein the trajectory is attached to and extends along the carrier layer;
wherein the heating circuit is formed of a flexible two-dimensional mesh (40) of slit-and-expanded material, SEM.

2. The heating element (20) according to claim 1, wherein the heating circuit (24) is shaped as a meandering trajectory that extends between the electrical terminals and across the carrier layer (22), and which includes a plurality of elongated linear strip portions (34) of SEM mesh (40) that are interconnected in series, and which extend mutually parallel and with nominal axes aligned with a longitudinal direction (X) of the carrier layer (22).

3. The heating element (20) according to claim 2, wherein the carrier layer (22) has a width (Wc) in a transverse direction (Y), the width varying as function of position along the longitudinal direction (X) to define at least one narrower carrier region (32a, 32b) and at least one wider carrier region (33a, 33b, 33c), and wherein the number of elongated strip portions (34) counted in transverse direction is lower in the narrower carrier region than the number of elongated strip portions in the wider carrier region.

4. The heating element (20) according to claim 2 or 3, wherein the carrier layer (22) is elongated and has a length (Lc) along the longitudinal direction (X) and a width (Wc) along the transverse direction (Y), the length being at least one order of magnitude larger than the width (Lc ≥ 10·Wc).

5. The heating element (20) according to any one of claims 2-4, wherein the elongated strip portions (34) have widths (Ws) along the transverse direction (Y), the widths being at least two orders of magnitude smaller than the length (Lc) of the carrier layer (22).

6. The heating element (20) according to claim 5, wherein all of the elongated strip portions (34) have essentially identical widths (Ws) along the transverse direction (Y).

7. The heating element (20) according to any one of claims 4-6, wherein the SEM mesh (40) is formed as a periodical mesh with anisotropic unit cells, wherein a shorter dimension (Dsw) of the mesh unit cells is aligned with the longitudinal direction (X) of the carrier layer (22), and wherein the longer dimension (Dlw) of the mesh unit cells is aligned with the transverse direction (Y) of the carrier layer.

8. The heating element (20) according to claim 7, wherein the vehicle interior component is a steering wheel (12), the curved surface (19) being at least a portion of an outer rim (18) of the steering wheel, the outer rim having a substantially toroidal shape associated with a toroidal angle (ϕ) and a poloidal angle (θ);
wherein the carrier layer (22) of the heating element is elongated, having a longer dimension (Lc) along the longitudinal direction (X) in the initial planar shape, the longer dimension being conformable to the circumference of the wheel along the toroidal angle when the heater element (20) is arranged around the outer rim, and having a shorter dimension (Wc) along the transverse direction (Y) in the initial planar shape, the shorter dimension being conformable to the circumference of the outer rim along the poloidal angle;
wherein the SEM mesh (40) is structured as a periodical mesh with anisotropic unit cells having a shorter cell dimension (Dsw) and a longer cell dimension (Dlw), the shorter cell dimension (Dsw) being aligned with the longitudinal direction (X), and the longer cell dimension (Dlw) being aligned with the transverse direction (Y).

9. The heating element (20) according to any one of claims 1-8, wherein the SEM mesh (40) consists essentially of copper or copper alloy, and wherein the SEM mesh (40) has a thickness (Hm) in a range of 10 micrometres to 200 micrometres, preferably in a range of 30 micrometres to 100 micrometres.

10. A vehicle interior component (12) defining a curved surface (19) that is provided with an electrically resistive heating element (20) according to any one of claims 1-9.

11. The vehicle interior component (12) according to claim 10, which is formed as a steering wheel, the curved surface (19) being at least a portion of an outer rim (18) of the steering wheel, and the SEM mesh (40) of the heating element (20) extending along the outer rim portion.

12. The vehicle interior component (12) according to claim 11, wherein the outer rim (18) of the steering wheel (12) has a substantially toroidal shape associated with a toroidal angle (ϕ) and a poloidal angle (θ), wherein the SEM mesh (40) is formed as a periodical mesh with anisotropic unit cells having a shorter cell dimension (Dsw) and a longer cell dimension (Dlw), wherein the shorter cell dimension is aligned with the toroidal angle (ϕ) and the longer cell dimension is aligned with the poloidal angle (θ) when the heater element (20) is arranged around the outer rim.

13. A vehicle (10) including a vehicle interior component (12) according to any one of claims 10-12.

14. A method for manufacturing an electrically resistive heating element (20) adapted for covering a curved surface (19) of a vehicle interior component (12), the method comprising:
providing a carrier layer (22) made of flexible and electrically insulating material;
providing two electrical terminals (26a, 26b) on the carrier layer (22), the terminals (26) being adapted to be electrically coupled to a source (28) for electrical current (I);
attaching a flexible two-dimensional slit-and-expanded material, SEM, mesh (40) onto a surface of the carrier layer (22) so as to form an electrically conducting surface strip trajectory that interconnects the electrical terminals (26) and forms a surface heating circuit (24) when energized by the source.

15. A method for manufacturing a vehicle interior component (12) with an electrically resistive heating element (20), the vehicle interior component (12) defining at least one curved surface (19) having one or more radii of curvature (R, r) such that the surface deviates from a developable surface in at least one warping direction, wherein the method includes:
providing an electrically resistive heating element (20) according to any one of claims 1-9 in an initially planar shape, the SEM mesh (40) being structured as a periodical mesh with anisotropic unit cells having a shorter dimension (Dsw) defined along a first mesh direction and a longer dimension (Dlw) defined along a second mesh direction;
arranging the heating element (20) on a portion of the curved surface (19) of the vehicle interior component (12), thereby aligning the shorter dimension (Dsw) of the SEM mesh with a direction of the curved surface (19) corresponding to a local direction or severest deviation from a developable surface;
folding the heating element along the surface while warping the heating element (20) out of its initially planar shape, in order to cover the curved surface (19), and
fixing the heating element (20) to the vehicle interior component (12).

16. A method for installing a heatable vehicle interior component (12) according to any one of claims 12-14 in a vehicle (10) having a source (28) for supplying electrical current, the method including:
positioning the vehicle interior component (12) with heating element (20) on an interior side of the vehicle (10), and
electrically coupling the electrical terminals (26) of the heating element (20) to the source (28).
